# EUROPEAN PATENT SPECIFICATION

(11) **EP 3 408 136 B1**
(45) Date of publication and mention of the grant of the patent: **14.10.2020**
(21) Application number: 17744628.3
(22) Date of filing: 25.01.2017
(51) Int. Cl.: B60P 7/08, B60P 7/13, B61D 45/00, B63B 25/24, B63B 25/28, B65D 90/12, F16C 11/00

(54) **APPARATUS AND METHOD FOR USE IN SECURING AN OBJECT TO A BASE**
VORRICHTUNG UND VERFAHREN ZUR VERWENDUNG BEIM BEFESTIGEN EINES OBJEKTS AN EINER BASIS
APPAREIL ET PROCÉDÉ DESTINÉS À ÊTRE UTILISÉS LORS DE LA FIXATION D'UN OBJET À UNE BASE

(30) Priority: 27.01.2016 NO 20160125; 18.01.2017 NO 20170074
(43) Date of publication of application: 05.12.2018
(73) Proprietor: Mobideck AS, 4344 Bryne (NO)
(72) Inventor: GUNDERSEN, John, Sverre, 4150 Rennesøy (NO); STEINSUND, Nils, Joar, 4327 Sandnes (NO); BYGDNES, Kjell, Tore, 4310 Hommersåk (NO)
(74) Representative: Håmsø Patentbyrå AS
(86) International application number: PCT/NO2017/050023
(87) International publication number: WO 2017/131529

(56) References cited:
- DE-U1-202008 012 608
- US-A- 3 601 349
- US-A- 3 601 349
- US-A- 5 139 375
- US-A- 5 139 375
- US-A1- 2002 114 659

## Description

The invention concerns an apparatus and a method for use in securing an object to a base, such as a deck on a vessel or a floating device. More particularly, it relates to an apparatus and a method for use in securing an object to a deck, wherein the apparatus comprises a beam profile with a lower flange, an upper flange and a web between the upper flange and the lower flange, the upper flange comprising a top face of opposite direction to a web face, two edge faces and a plurality of cut-outs extending along a longitudinal direction of at least one of the edge faces.

The object may typically be a container, a winch, an HPU (High-Pressure Unit), a tank or a cargo frame commonly used in operations offshore. When such an object, also called a "unit" in what follows, is to be used offshore on a vessel or on a floating installation, it must be secured against weather, wind and movements to which it may become subjected. This is to prevent the unit from moving relative to the deck and thereby possibly damaging other equipment, the vessel or human beings.

One of today's methods of securing an object or a unit on a deck of a vessel or a floating device consists in welding steel plates, which hold the unit, to steel beams which in turn are secured in a corresponding manner by means of a weld to the deck of the vessel. This method is time-consuming and also expensive with respect to material. More often than not, plates and steel beams that are used between the unit and deck are to be regarded as junk after the operation is finished. The adaptations of plates and beams are often performed *in situ* on deck. In a large operation in which many units or much equipment are/is to be secured, such an operation may take several days. The method of today requires a long planning time and, in addition, is not very flexible in relation to any needs for changes that might arise. Such needs for changes may, for example, arise in consequence of a change of vessel, change in the positioning and/or construction of the unit and/or unforeseen obstacles on the deck of the vessel. The applicant does not know of any standard way of carrying out such securing or sea-fastening either, so that calculations and detailed planning will have to be carried out for every unit that is to be secured, which in turn is expensive and time-consuming.

From the publication US 3,601,349 a tie-down device for use in securing a load to a lorry or a railway car is known. The tie-down device comprises a lug body which is brought into engagement with a beam when a tie element is strained. The lug body has a shoulder portion from which a pair of arms depend downwardly. The arms terminate in nose portions adapted to contact an underside of a top flange of the beam upon upward displacement of the lug body. At least one of the arms has a stub or tooth which is adapted to extend into one of a plurality of indentations provided in the top flange of the beam when the tie element is strained.

From the publication US 5,139,375 a removable and adjustable securing device for an underlying structure is known. The securing device comprises a spring-biased securing clip which is placed around a rail. The securing clip comprises hook bodies which are adapted to engage with a toothing arranged on an underside of the rail so that movement of the securing device along the rail is prevented.

From the publication US 2002/0114659 A1 a rail provided with an attachment slot defined between to support legs is known.

The invention has for its object to remedy or reduce at least one of the drawbacks of the prior art or at least provide a useful alternative to the prior art.

The object is achieved through the features that are specified in the description below and in the claims that follow.

According to the present invention, a load-securing apparatus is provided in which individual components are assembled into a structure or a framework on which equipment can be placed. Securing the unit or load is done by the load being locked by the use of a fastening means which is attached to the frame, and which fits the unit. In one embodiment, this may then be connected to the load that is to be secured, before the frame and the load are placed on a base such as a deck of a floating vessel or on a platform of a road or railway transport means.

All the parts or components used for the apparatus according to the present invention may be fully reusable. Whenever there is a need for replacing units at a later time, components that are not fixed by welding may be disconnected and moved to a new position for the securing of an object or unit of a possible different design.

The apparatus according to the present invention consists of loose components that fit together in different configurations.

In a first aspect of the present invention, an apparatus for use in securing an object to a base is provided, the apparatus comprising a beam profile with a lower flange, an upper flange and a web between the upper flange and the lower flange, the upper flange comprising a top face of opposite direction to a web face, two edge faces, and a plurality of cut-outs extending along a longitudinal direction of at least a portion of one of the edge faces. The apparatus further includes an angle profile with a first leg and at least one second leg, wherein at least part of the first leg is arranged to rest, in the position of application, against a portion of the top face of the upper flange, the first leg being provided with at least one pin arranged to engage with a portion of said plurality of cut-outs when the first leg rests against the top face; and a locking piece being attached, in the position of application, to the second leg between the second leg and the web of the beam profile, a portion of the locking piece resting, in the position of application, against a portion of the web face of the upper flange.

One purpose of the locking piece is the ability to bias the at least one pin into engagement with the cut-out and also to prevent movement of the first leg away from the abutment against the top face of the flange.

The portion of the locking piece that is placed against a portion of the web face of the upper flange in the position of application may rest against both said portion of the web face and the edge face. In one embodiment, the portion of the locking piece rests against the web face and the one of the edge faces of the second flange that is opposite the edge face with the cut-outs.

The locking piece is preferably attached to the second leg by means of at least two screws extending through holes in the second leg and being threadedly connected to screw holes in the locking piece. The use of screws brings easy releasing or fixing of the locking piece without the use of special tools or so-called "hot work" as will be the case when welding is used.

In the position of application, the holes in the second leg may have an extent in the longitudinal direction of the beam profile that is larger than an extent in a direction between the first flange and the second flange. The effect of this is that, before the screws have been fully tightened, the screws and the locking piece may be displaced somewhat relative to the angle profile and the beam profile along the longitudinal direction of the beam profile.

In a preferred embodiment, the extent of the holes in the longitudinal direction of the beam profile is larger than the inter-cut-out distance. This has the effect of the screws and the locking piece being steplessly adjustable relative to the angle profile and the beam profile. The cut-outs may be a plurality of bores or holes, or a toothing comprising openings or "notches". The bores may be through bores or they may be recesses.

The apparatus may further comprise a connecting means with screw holes to be placed on the second leg of the angle profile by means of the screws, the connecting means being arranged to rest, in the position of application, against the second leg on the opposite side to the locking piece, so that the second leg is between the connecting means and the locking piece.

The screw holes in the connecting means may, in one embodiment, have an extent in the longitudinal direction of the beam profile that is smaller than an extent in a direction between the first flange and the second flange. An embodiment in which such a design of the screw holes of the connecting means is combined with the above-mentioned design of the holes in the second leg, in which the holes, in the position of application, have an extent in the longitudinal direction of the beam profile that is larger than an extent in a direction between the first flange and the second flange, has the effect that the connecting means will be adjustable both in the longitudinal direction of the beam profile and in height, in a direction between the upper flange and the lower flange, that is. Alternatively, in the position of application, the screw holes of the connecting means may have an extent in the longitudinal direction of the beam profile that is larger than an extent in a direction between the first flange and the second flange, in height, that is. Combined with the above-mentioned design of the holes in the second leg, in which the holes, in a position of application, have an extent in the longitudinal direction of the beam profile that is larger than an extent in a direction between the first flange and the second flange, a "double" sideways adjustment may be achieved.

It is also conceivable that the holes in the second leg are circular, but the screw holes of the connecting means have an extent in the longitudinal direction of the beam profile that is larger than an extent in a direction between the first flange and the second flange in the position of application. The connecting means will then be displaceable relative to the angle profile and the beam profile along the longitudinal direction of the beam profile.

The first leg of the angle profile may be provided with at least one hole for receiving a fixing screw for use in the direct or indirect attachment of the object, which is to be secured, to the angle profile. Indirect attachment may be performed by the use of a further connecting means which will be described in more detail in the exemplary embodiments.

In a second aspect of the present invention, a supporting frame assembled by means of the apparatus according to the first aspect of the invention is described, the supporting frame being assembled from at least two first beam profiles which are arranged parallel to each other and held spaced apart by means of at least two second beam profiles which are also arranged parallel to each other, each of the at least two second beam profiles being provided with an end plate fixedly attached at the end portions of the beam profiles, each end plate being connected to a respective U-shaped angle profile which is attached to the first beam profiles.

It will be understood that, in one embodiment, two apparatuses according to the first aspect of the invention may be connected to each other by means of a weld joint to form a supporting frame.

In a third aspect of the present invention, a method of using the supporting frame according to the second aspect of the invention is provided, the method comprising the steps:
- providing the supporting frame with a fastening means arranged on a portion of the angle profile; and
- attaching an object, which is to be carried by the supporting frame, to the fastening means.

The method may include attaching the object to the supporting frame before the object is placed on the base. The base may be a deck on a floating vessel or a load platform on a road or railway transport means. The supporting frame may thus already be attached to the object at a workshop or a storage site and be an integrated part of the object. Thereby the handling operation will be facilitated to a substantial degree compared with, for example, sea-fastening operations according to the prior art. The method may further include fixing the supporting frame to the base by means of a fastening means attached to the supporting frame.

In an alternative method, the attachment is done after the supporting frame has been fixed to a base by means of a fastening means attached to the supporting frame.

In what follows, examples of preferred embodiments are described, which are visualized in the accompanying drawings, in which:
- Figure 1a: shows an isometric view of the apparatus according to the present invention, seen in perspective;
- Figure 1b: shows an exploded view of the apparatus shown in figure 1a;
- Figure 1c: shows a side view, on a larger scale, of the apparatus shown in figure 1, seen from the right towards the left;
- Figure 1d: shows a cross-sectional view of the assembly shown in figure 1c;
- Figure 2a: shows an isometric view of the apparatus according to the present invention, seen in perspective, in which a fastening profile is attached to a portion of the angle profile;
- Figure 2b: shows an exploded view of the apparatus shown in figure 2a;
- Figure 2c: shows a side view, on a larger scale, of the apparatus shown in figure 2a seen from the right towards the left;
- Figure 2d: shows a cross-sectional view of the assembly shown in figure 2c;
- Figure 3a: shows an isometric view of the apparatus according to the present invention, seen in perspective, in which an alternative fastening profile is attached to a portion of the angle profile;
- Figure 3b: shows an exploded view of the apparatus shown in figure 3a;
- Figure 3c: shows a side view, on a larger scale, of the apparatus shown in figure 3a seen from the right towards the left;
- Figure 3d: shows a cross-sectional view of the assembly shown in figure 3c;
- Figure 4a: shows an isometric view of the apparatus according to the present invention, seen in perspective, in which an alternative fastening profile is attached to a portion of the angle profile;
- Figure 4b: shows an exploded view of the apparatus shown in figure 4a;
- Figure 4c: shows a side view, on a larger scale, of the apparatus shown in figure 4a seen from the right towards the left;
- Figure 4d: shows a cross-sectional view of the assembly shown in figure 4c;
- Figure 5a: shows an isometric view of the apparatus according to the present invention, seen in perspective, in which an alternative fastening profile is attached to a portion of the angle profile;
- Figure 5b: shows an exploded view of the apparatus shown in figure 5a;
- Figure 5c: shows a side view, on a larger scale, of the apparatus shown in figure 5a seen from the right towards the left;
- Figure 5d: shows a cross-sectional view of the assembly shown in figure 5c;
- Figure 6a: shows an isometric view of the apparatus according to the present invention, seen in perspective, in which a fastening profile is used to connect two beam profiles to provide part of a frame structure;
- Figure 6b: shows an exploded view of the apparatus shown in figure 6a;
- Figure 6c: shows a side view, on a larger scale, of the apparatus shown in figure 6a seen from the right towards the left;
- Figure 6d: shows a cross-sectional view of the assembly shown in figure 6c;
- Figure 7: shows an alternative embodiment of the assembly shown in figure 1d;
- Figure 8a: shows an isometric view of part of a frame provided by means of the apparatus according to the present invention; and
- Figure 8b: shows a detail A of figure 8a on a larger scale.

Positional specifications, such as over, under, upwards, downwards, upper, lower, right and left, refer to the positions that are shown in the figures.

For illustrative reasons, the size ratios between some of the elements may be somewhat distorted.

Like or corresponding elements are indicated by the same reference numeral in the various figures, but, for the sake of exposition, some of the elements may be shown without reference numerals in some of the figures.

In the figures, the reference numeral 1 indicates an apparatus according to the present invention. The apparatus 1 comprises a beam profile 3 with a lower flange 5 and an upper flange 7 and a web 9 between the upper flange 7 and the lower flange 5. The upper flange 7 comprises a top face 11 of opposite direction to a web face 13, and two edge faces 15, 15'. In the embodiment shown, one of the edge faces 15' is provided with a plurality of cut-outs, shown here as a toothing 17, extending along a longitudinal direction of the beam profile 3. The cut-outs of said plurality of cut-outs may alternatively be holes (not shown) arranged in a spaced-apart manner. The holes may be through holes, or they may be non-through holes, recesses, that is. In what follows, the cut-outs will be referred to as a toothing. An embodiment (not shown) in which both edge faces 15, 15' are provided with a toothing 17 to allow two beam profiles 3 to project perpendicularly, each from a respective side of a third beam profile 3, but from different positions along the longitudinal axis of the beam profile 3 is also conceivable.

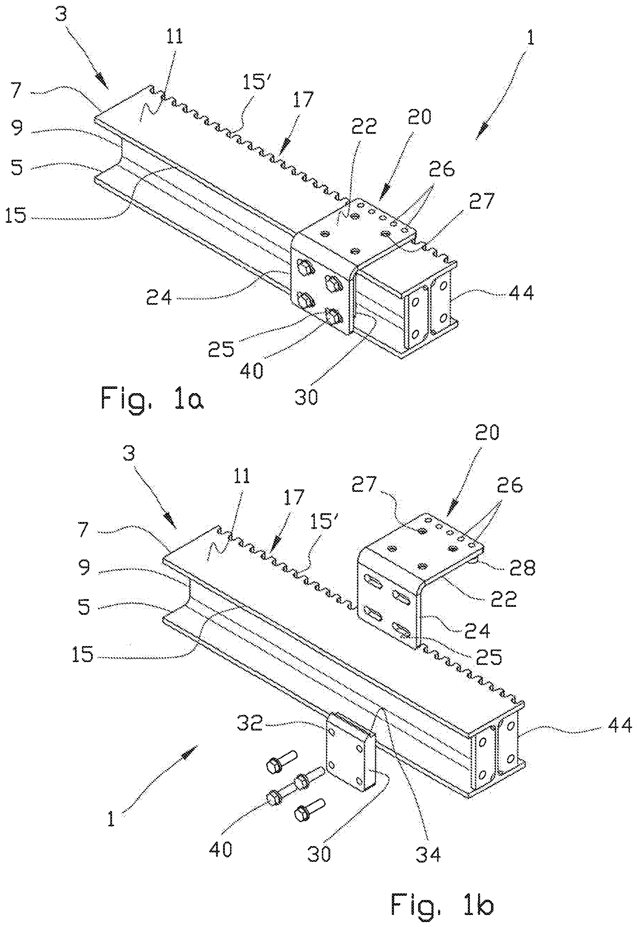

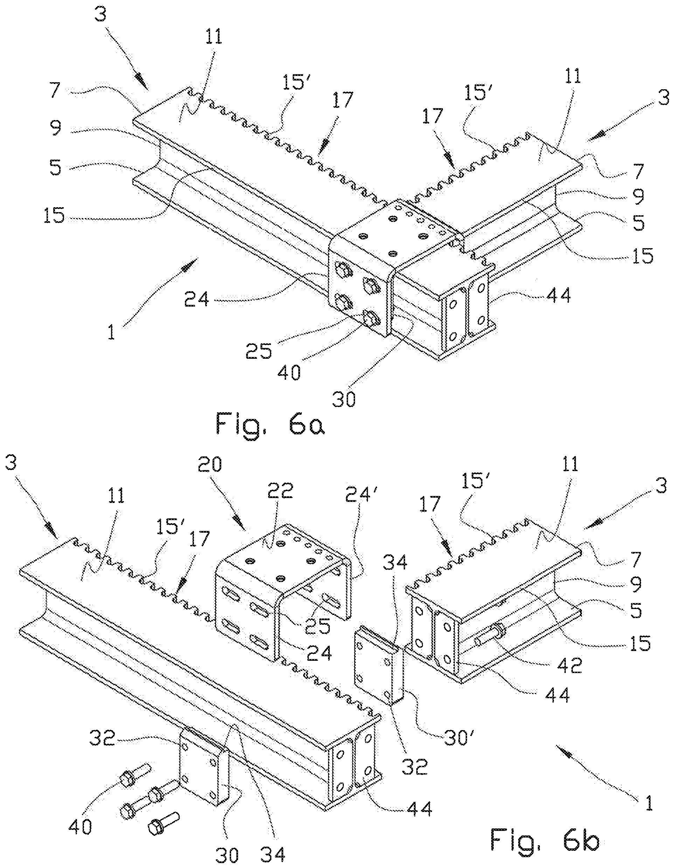

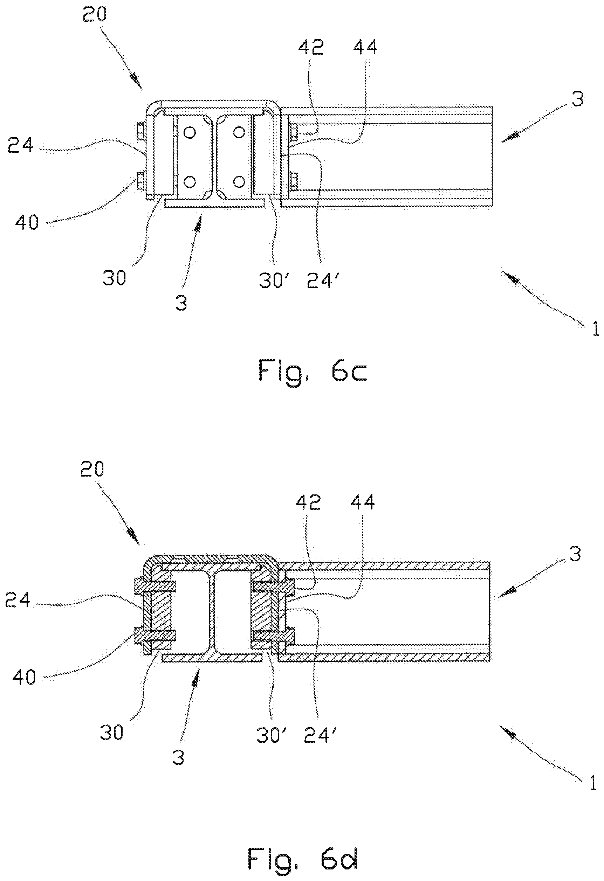

The apparatus 1 further includes an angle profile 20 with a first leg 22 and at least one second leg 24, 24'. In figures 1a to 5d the angle profile 20 is shown with one second leg 24, whereas the angle profile 20 in figures 6a to 6d is shown with two second legs 24, 24'. In the embodiments shown, the angle profile 20 is a right-angled one. In the embodiments shown, the angle profile 20 is provided with screw holes 27 (four shown). In figures 1a to 6d, the at least one second leg 24, 24' has an extent transversely to the longitudinal direction of the beam profile 3 that is larger than the distance between the edge faces 15, 15' of the upper flange 7.

The first leg 22 is provided with at least one pin 26 extending downwards from an end portion of the first leg 22. In the embodiments that are shown in figures 1a to 6d, the pins 26 are bolts 26 with bolt heads 28 which, in the position of application, abut against the web face 13 in the toothing 17. The bolt heads 28 will thereby contribute to absorbing vertical upward forces. The spacing of the bolts 26 is adapted to the toothing 17. In an embodiment not shown, the first leg 22 is provided with a different number of pins or bolts 26 from the indicated five, for example one to four, or, depending on the extent of the first leg 22 in the longitudinal direction of the beam profile 3, more than five.

The second leg 24 is provided with elongated holes 25 (four shown) with an extent in the longitudinal direction of the beam profile 3 that is larger than an extent in a direction between the first flange 5 and the second flange 7, i.e. with an extent which is larger in a horizontal direction than in a vertical direction in the position that the apparatus 1 has in the figures.

The apparatus further includes a locking piece 30 for releasable attachment to the second leg 24, 24' between the second leg 24, 24' and the web 9 of the beam profile 3, but at a distance from said web 9. In the position of application, an upper portion of the locking piece 30 is placed against a portion of the web face 13 of the upper flange 7, as is explained in what follows. The locking piece 30 is provided with holes 32 with threads complementarily fitting screws 40 (four shown).

The locking piece 30 shown in figures 1a to 5d is provided with a shoulder 34 in its upper portion, resting, in the position of application, against an outer portion of the web face 13 and against the edge face 15 of the upper flange 7. In figures 6a to 6d, showing two locking pieces 30, 30', the shoulder 34 of one locking piece 30 rests against an outer portion of the web face 13 and against the edge face 15, whereas the other locking piece 30' rests against an outer portion of the web face 13 and against the edge face 15'. The shoulder 34 of the other locking piece 30' thus rests against the bottom side of the toothing 17 in the embodiment shown.

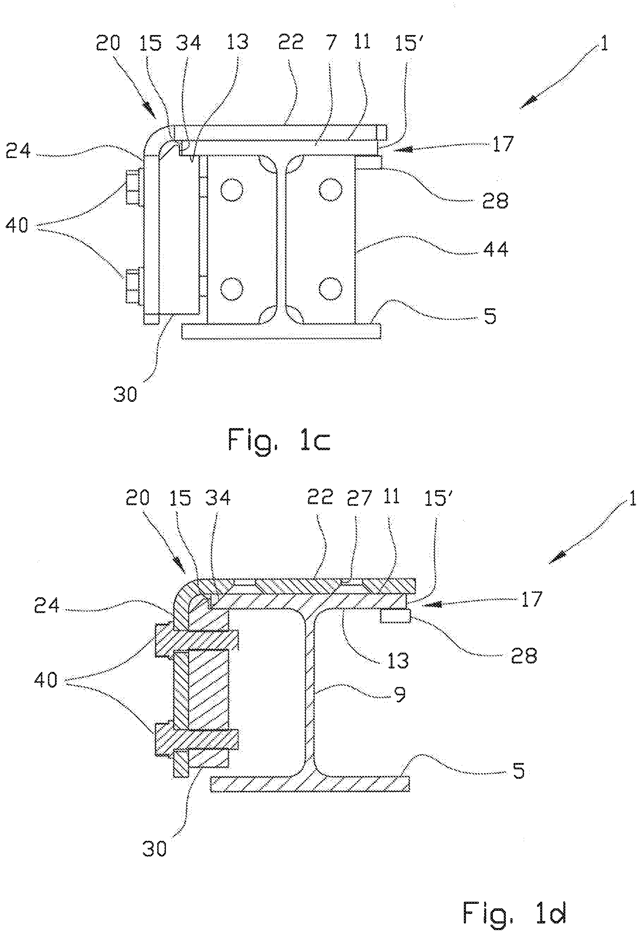

When the apparatus 1 shown in figures 1 to 5d is being assembled, the locking piece 30 is brought against the upper flange 7, as appears from the above. The first leg 22 of the angle profile 20 is placed against the top face 11 of the upper flange 7 in the desired position along the beam profile 3, while, at the same time, the pins 26 are brought into engagement with the toothing 17 of the beam profile 3. The position of the locking piece 30 is adjusted in relation to the position of the angle profile 20, so that the holes 32 of the locking piece 30 are aligned with the holes 25 of the second leg 24.

In the embodiments that are shown in figures 1a to 2d, the screws 40 are inserted through the holes 25 in the second leg 24 into threaded engagement with the holes 32 of the locking piece 30, after which the screws 40 are tightened with a suitable tool. By such a tightening, the shoulder 34 of the locking piece 30 will lock the pins or bolts 26 in engagement with the toothing 17 of the beam profile 3, while, at the same time, the shoulder 34 and the heads 28 of the bolts 26 prevent vertical movement of the angle profile 20. The angle profile 20 is thereby securely attached in the desired position to the beam profile 3.

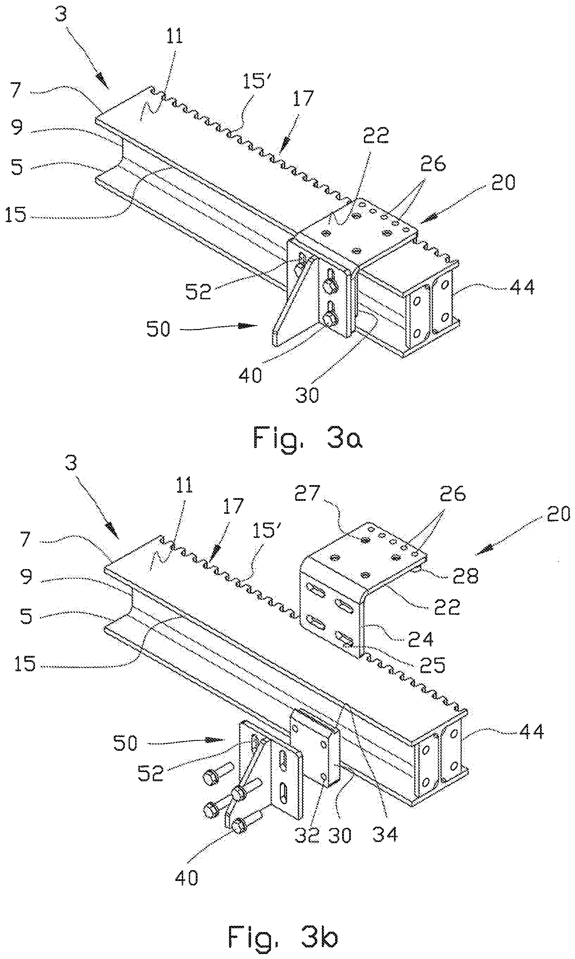

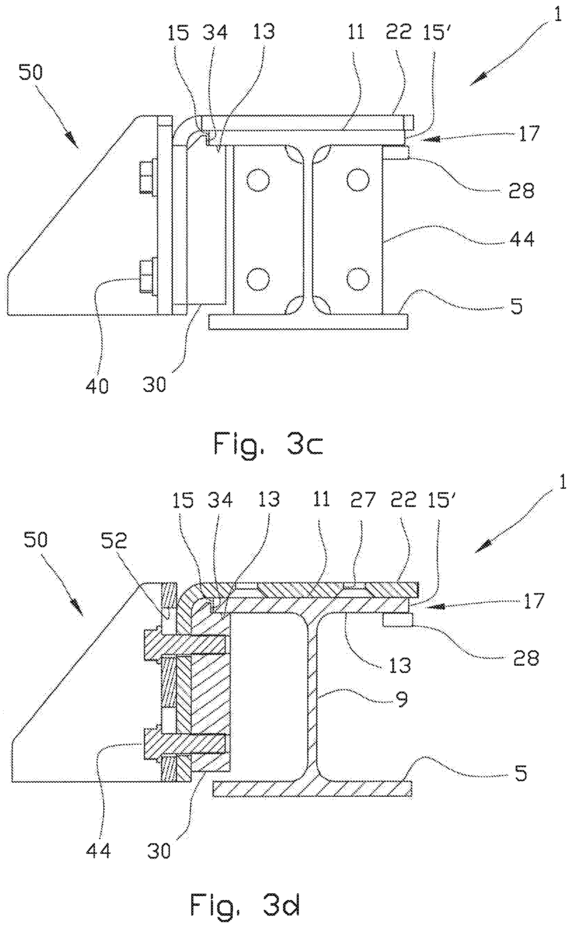

In the embodiments shown in figures 3a to 5d, the apparatus 1 further includes a connecting means, generally indicated by the reference numeral 50. A purpose of the connecting means 50 may be, for example, to fix the apparatus 1 to a base, such as a deck on a floating vessel. The fixing is typically carried out by welding a portion of the fastening means 50 to the deck of the vessel.

The connecting means 50 is provided with screw holes 52 which, in the embodiment shown, are elongated with an extent in the longitudinal direction of the beam profile 3 that is smaller than an extent in a direction between the first flange 5 and the second flange 7, accordingly with a largest extent that, in the position of application, is at 90° to a largest extent of the holes 25 in the second leg 24 of the angle profile 20.

When the apparatus 1 shown in figures 3a to 5d is being assembled, a method having similarities with the method explained above is used to lock the angle profile 20 to the beam profile 3, but with a difference: before the screws 40 are passed through the holes 32 of the locking piece 30, the connecting means 50 is positioned in abutment against the second leg 24 on the opposite side to the locking piece 30, so that the second leg 24 is placed between the connecting means 50 and the locking piece 30. After an adjustment of the screw holes 52 of the connecting means 50 to the holes 25 of the second leg 24 of the angle profile 20 and to the holes 32 of the locking piece 30, the screws 40 are inserted through the connecting means 50 and the angle profile 20 into threaded engagement with the holes 32 in the locking piece 30. Before the screws 40 are tightened with a suitable tool, a fine-adjusting of the position of the connecting means 50 relative to the beam profile 3 may be performed. In consequence of the elongated holes 25 in the second leg 24 of the angle profile 20, the screws 40 and the locking piece 30 with which the screws are now engaged can be moved sideways between the boundaries of the screw holes 25, i.e. parallel to the longitudinal axis of the beam profile 3. Provided that the extent of the screw holes 25 in the longitudinal direction of the beam profile 3 is larger than the distance between the adjacent openings or "notches" of the toothing 17, the effect of the screws 40, the fastening means 50 and the locking piece 30 being steplessly adjustable relative to the angle profile 20 and the beam profile 3 is achieved. Thereby, a very accurate adjustment of the connecting means 50 relative to the angle profile 20 and, accordingly, the beam profile 3 can be achieved.

Because of the elongated screw holes 52 in the connecting means 50, a corresponding vertical fine-adjustment of the connecting means 50 relative to the angle profile 20 can be achieved. The possibilities of fine-adjustment are defined by the vertical extent of the screw holes 52.

After the desired position of the connecting means 50 has been achieved, the screws 40 are tightened with a suitable tool so that the apparatus 1 is locked in the desired position.

In an alternative embodiment (not shown), the connecting means 50 is provided with circular screw holes. However, in an embodiment like that, vertical adjustment of the connecting means 50 is not possible. In a further alternative embodiment, the connecting means 50 is provided with elongated screw holes which, in the position of application, extend parallel to the holes 25 in the second leg 24 of the angle profile 20. In an embodiment like that, a "double" sideways adjustment may be generated.

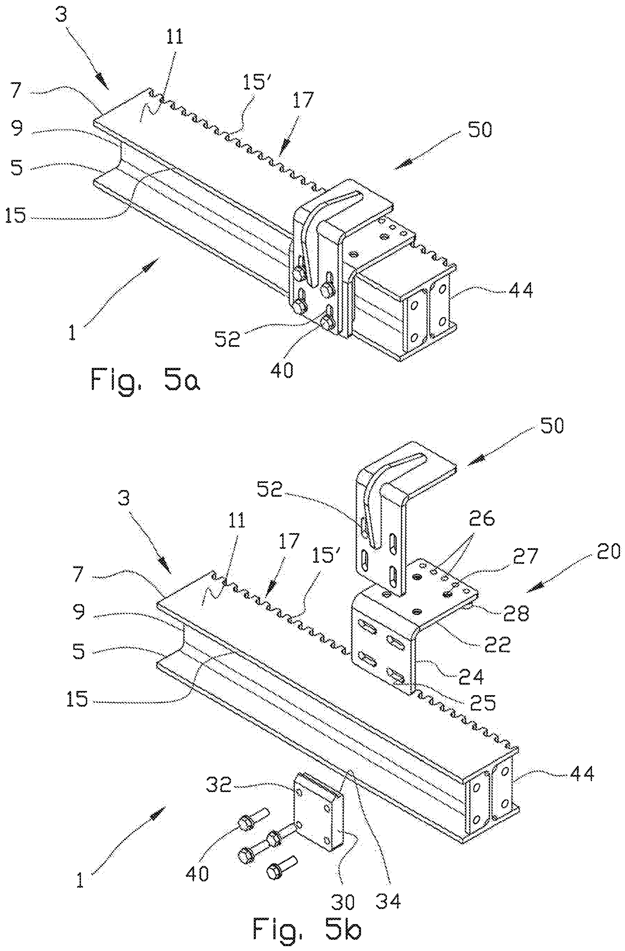

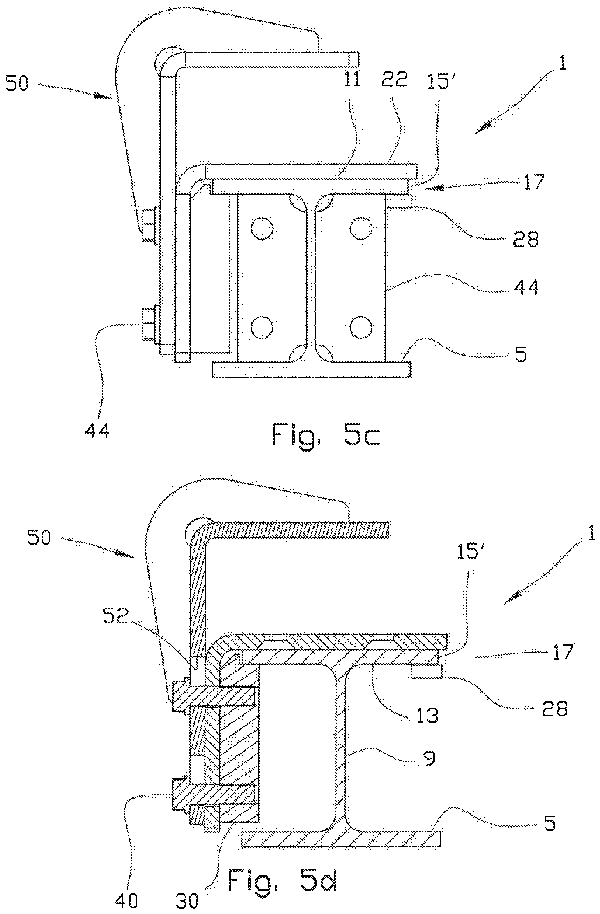

Figures 3a to 5d show three different types of connecting means 50, figures 3a to 4d showing connecting means 50 primarily arranged to be attached to a base, not shown, on, for example, a deck of a floating vessel as mentioned above, whereas figures 5a to 5d show a connecting means 50 primarily arranged to clamp an object (not shown) to the apparatus 1.

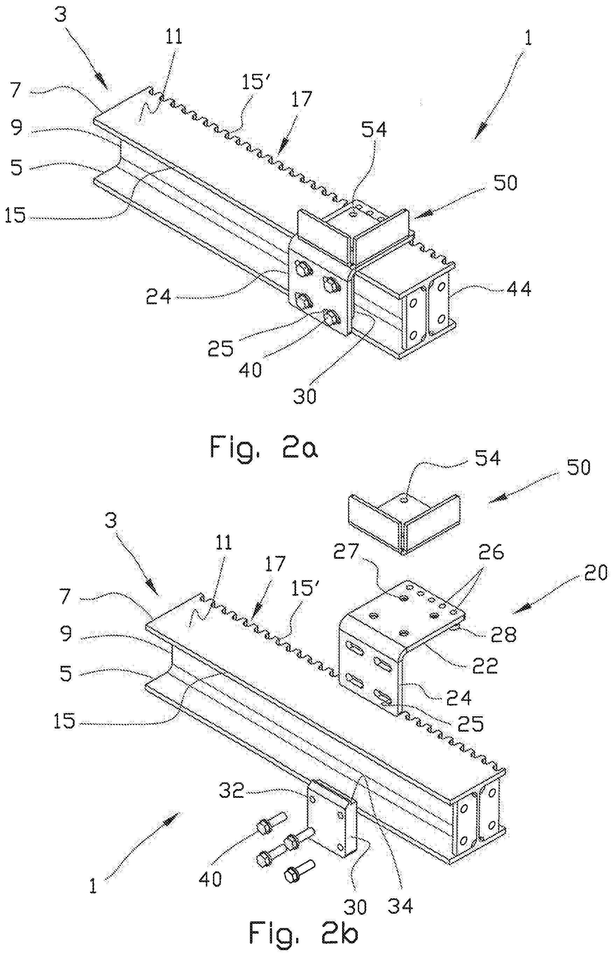

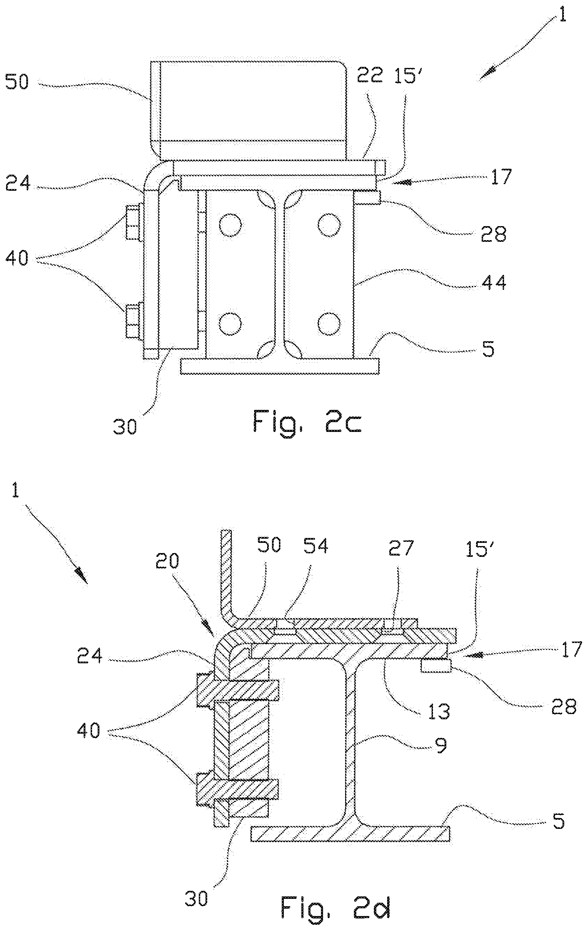

In figures 2a to 2d is shown a connecting means 50 which is attached to the first leg 22 of the angle profile 20 by means of screws (not shown) inserted through the screw holes 27 in the leg 22 into threaded connection to complementarily adapted screw holes 54 in the connecting means 50. In such a solution, the attachment of the connecting means 50 to the angle profile 20 must be carried out before the angle profile 20 is placed against the top face 11 of the upper flange 7 and then fixed as explained earlier in the description of figures 1a to 2d.

It will be understood that the connecting means 50 shown in figures 2a to 2d may be combined with a fastening means of the kind that is shown in figures 3a to 4d, and in some cases also with a connecting means 50 of the kind that is shown in figures 5a to 5d.

Figures 6a to 6d show two beam profiles 3 that are assembled with the longitudinal axes of the beam profiles 3 arranged at right angles to each other.

In the embodiment shown, the angle profile 20 is provided with two second legs 24, each of the two legs 24 being identical to the leg 24 shown in figures 1a to 5d. In said figures, the angle profile 20 has a U-shape. Also, the first leg 22 of the angle profile 20 in the embodiment shown is identical to the leg 22 shown in figures 1a to 5d.

When the beam profiles 3 shown in figures 6a to 6d are being assembled, the angle profile 20 is locked to one of the two beams 3 in a manner similar to that explained in the description of figures 1a to 2d. However, a shoulder 34 of a further locking piece 30' is brought against the toothing 17. The purpose of this further locking piece 30' is to receive beam screws 42 (shown best in figure 6d) which are inserted through screw holes (four shown) in end plates 44 securely attached to the upper flange 7 and the lower flange 5 and/or the web 9, typically with a weld joint, and into threaded engagement with the further locking piece 30'. In the same way as the fastening means 50 shown in figures 3a to 5d can be fine-adjusted sideways, the right-hand beam profile 3 can be fine-adjusted along the longitudinal axis of the left-hand beam profile 3 inside restrictions determined by the elongated holes 25 of the angle profile 20.

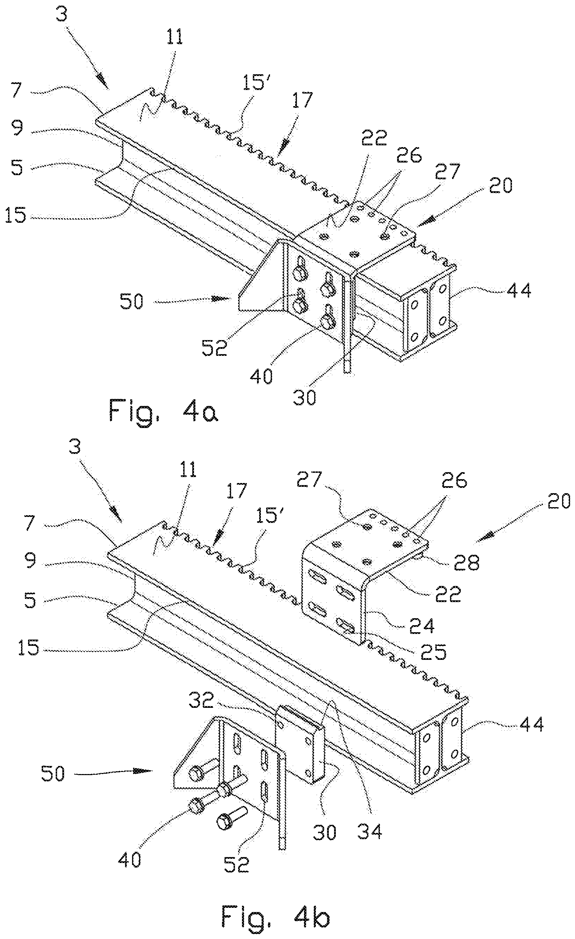

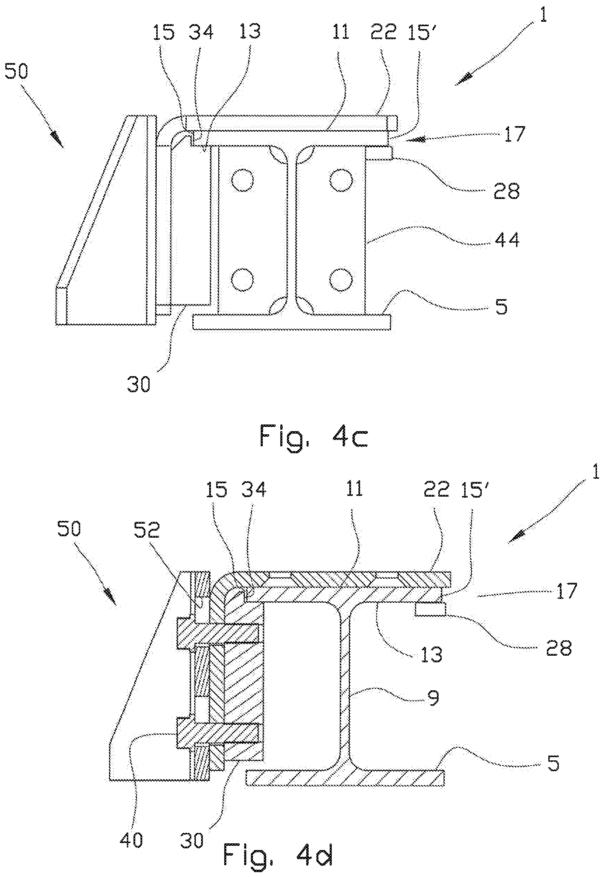

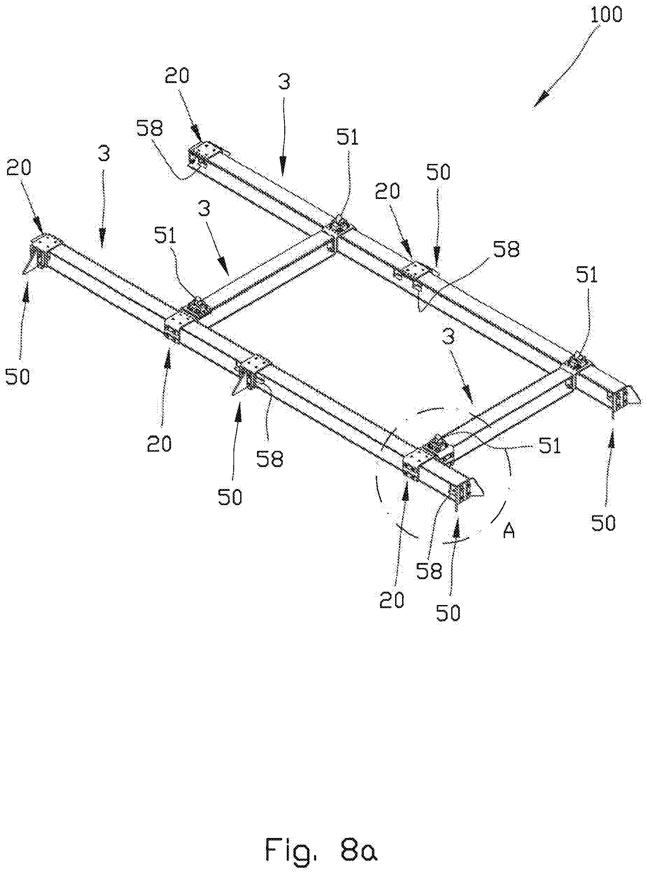

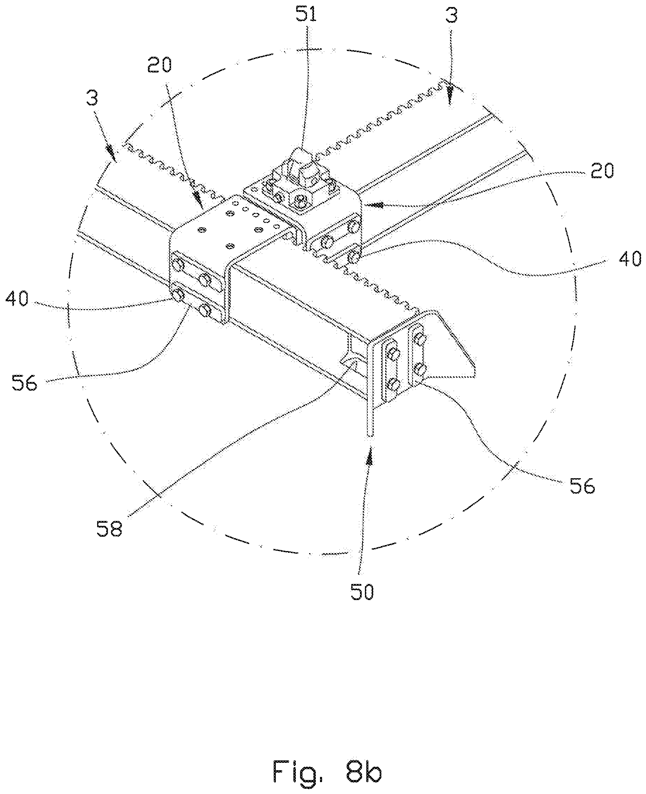

It should be noted that a connecting means 50, for example the fastening means that is shown in figures 4a and 4b, may be attached to the end plates 44 by means of bolts, as shown in figures 8a and 8b.

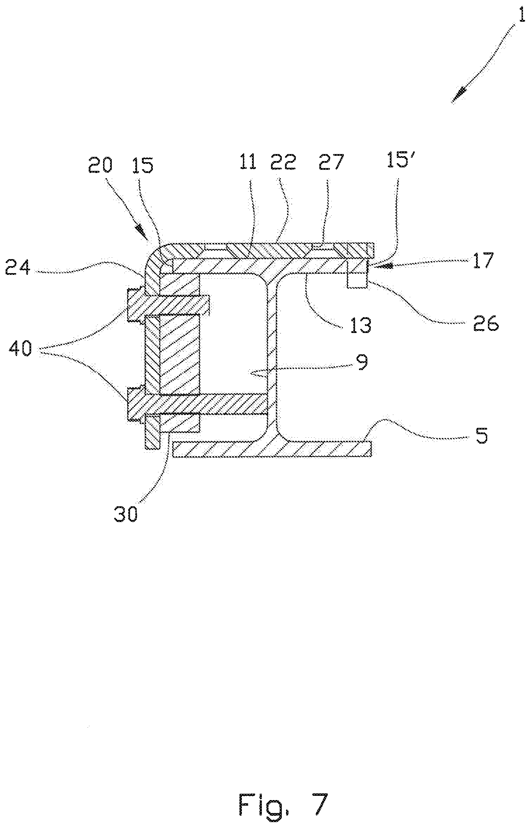

Figure 7 shows a variant of the apparatus 1 according to the present invention. The embodiment shown in figure 7 has similarities with the one shown in figure 1d, but with three significant differences. A first difference is that the locking piece 30 is without a shoulder 34 as shown in figure 1d among others. In the position of application, an upper edge face of the locking piece 30 rests against the web face 13 of the upper flange 7, and a transition portion between the first leg 22 and the second leg 24 of the angle profile 20 meets the upper edge portion 15 of the upper flange 7. A second difference is that the pins 26 are without bolt heads 28 of the kind that is shown in figure 1d, for example. With the design shown in figure 7, the angle profile 20 can be placed in or out of engagement with the toothing 17 in the main in a vertical direction. A third difference is that, in a position of application, an end portion of at least one of the screws 40 connecting the locking piece 30 to the second leg 24 of the angle profile 20 abuts against the web 9 of the beam profile 3. Rotation of the angle profile 20 around the edge portion 15 of the upper flange 7 is thereby prevented. The pin or pins 26 may thereby be made without a bolt head 28 which is shown in the other figures. A corresponding effect to that shown in figure 7 with the lower screw 40 may be achieved by providing a locking piece 30 in which at least a portion of the locking piece 30, preferably a lower portion, is formed in such a way that, in the position of application, the locking piece 30 is resting against a portion of the web 9 of the beam profile 3. The locking piece 30 may be formed as an "L-profile", for example.

It will be understood that features of the embodiment shown in figure 7 and explained above could be used in the embodiments shown in the other figures. By using at least one screw 40 and/or a portion of the locking piece 30 that is/are resting against the web 9 of the beam profile 3 in the position of application, the pins 26 may be formed with or without bolt heads 28. Further, the locking piece 30 shown in the other figures may be formed with or without the shoulder 34. Correspondingly, the locking piece shown in figure 7 may be formed with a shoulder 34 as shown in the other figures. Thus, the at least one second leg 24, 24' shown in figures 1a to 6d may be formed with and extent transversely to the longitudinal direction of the beam profile 3 essentially equal to the distance between the edge faces 15, 15' of the upper flange 7.

Figure 8a shows a supporting frame 100 assembled by means of the apparatus 1 according to the present invention. The supporting frame100 comprises four beam profiles 3 that are connected to each other in the same manner as shown in figures 6a to 6d. In figure 8a, the supporting frame 100 is provided with four fastening means 50 of the kind that is shown in figures 3a to 3d, and that are placed along a longitudinal axis of two of the beam profiles 3. The supporting frame 100 is further provided with two more fastening means 50 of the kind that is shown in figures 4a to 4d. The latter fastening means 50 are placed on end plates 44 arranged in end portions of two of the beam profiles 3. The angle profiles 20 that are used in the junctions between two beam profiles 3 are provided with fastening means of the kind that is known in the trade as so-called ISO locks, which are generally indicated by the reference numeral 51. The ISO locks 51 are attached to the first leg 22 of the angle profile 20 in principle in the same way as explained in the description of figures 2a to 2d, but screws are provided with nuts instead of being in threaded engagement with the fastening means 50.

Figure 8b shows the detail A shown in figure 8a on a larger scale. It should be noted that, two by two, the elongated holes 25 in the angle profiles 20 and the elongated screw holes 52 in the connecting means 50 are provided with elongated washers 56 required by some authorities, typically so-called classification authorities. The lower flange 5 of the beam profile 3 is provided with cut-outs 58 for receiving an ISO lock (not shown) placed on a base not shown. A person skilled in the art will know that an object, such as a container, is attached to the supporting frame 100 by means of the ISO locks.

It should be noted that all the above-mentioned embodiments illustrate the invention, but do not limit it, and persons skilled in the art may construct many alternative embodiments without departing from the scope of the attached claims. In the claims, reference numbers in parentheses are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. An apparatus (1) for use in securing an object to a base, such as a deck on a floating vessel, the apparatus (1) comprising:
- a beam profile (3) with a lower flange (5), an upper flange (7) and a web (9) between the upper flange (7) and the lower flange (5), the upper flange (7) comprising a top face (11) of opposite direction to a web face (13), two edge faces (15, 15'), and a plurality of cut-outs (17) extending along a longitudinal direction of at least a portion of one of the edge faces (15), **characterized in that** the apparatus (1) further comprises:
- an angle profile (20) with a first leg (22) and at least one second leg (24, 24'), at least part of the first leg (22) being arranged to rest, in the position of application, against a portion of the top face (11) of the upper flange (7), the first leg (22) being provided with at least one pin (26) arranged to engage with a portion of said plurality of cut-outs (17) when the first leg (22) rests against the top face (11); and
- a locking piece (30, 30') being attached, in the position of application, to the second leg (24, 24') between the second leg (24, 24') and the web (9) of the beam profile (3), a portion of the locking piece (30, 30') resting against a portion of the web face (13) of the upper flange (7).

2. The apparatus (1) according to claim 1, wherein, in the position of application, said portion of the locking piece (30) is resting against both said portion of the web face (13) and the edge face (15).

3. The apparatus (1) according to claim 1 or 2, wherein the locking piece is attached to the second leg (24, 24') by means of at least two screws (40) extending through holes (25) in the second leg (24, 24') and being threadedly connected to holes (32) in the locking piece (30).

4. The apparatus (1) according to claim 3, wherein, in the position of application, the holes (25) of the second leg (24, 24') have an extent in the longitudinal direction of the beam profile (3) that is larger than an extent in a direction between the first flange (5) and the second flange (7), so that, when being assembled, the screws (40) and thereby the locking piece (30, 30') are displaceable relative to the angle profile (20) and the beam profile (3).

5. The apparatus (1) according to claim 4, wherein the extent of the holes (25) in the longitudinal direction of the beam profile (3) is larger than the distance between the cut-outs (17).

6. The apparatus (1) according to any one of claims 3 to 5, wherein the apparatus (1) further includes a connecting means (50) with screw holes (52) for positioning on the second leg (24) of the angle profile (20) by means of the screws (40), the connecting means (50) being arranged to rest, in the position of application, against the second leg (24) on the opposite side to that of the locking piece (30), so that the second leg (24) is between the connecting means (50) and the locking piece (30).

7. The apparatus (1) according to claim 6, wherein, in the position of application, the screw holes (52) have an extent in the longitudinal direction of the beam profile (3) that is smaller than an extent in a direction between the first flange (5) and the second flange (7).

8. The apparatus (1) according to claim 6, wherein, in the position of application, the screw holes (52) have an extent in the longitudinal direction of the beam profile (3) that is larger than an extent in a direction between the first flange (5) and the second flange (7).

9. The apparatus (1) according to any one of the preceding claims, wherein the first leg (22) of the angle profile (20) is provided with at least one hole (27) for receiving a fixing screw.

10. A supporting frame (100) made by means of the apparatus (1) according to any one of claims 1 to 9, wherein the supporting frame (100) is assembled from at least two first beam profiles (3) which are arranged parallel to each other and held spaced apart by means of at least two second beam profiles (3) which are also arranged parallel to each other, each of the at least two second beam profiles (3) being provided with an end plate (44) fixedly attached at the end portions of the beam profiles (3), each end plate (44) being connected to a respective U-shaped angle profile (20) which is attached to the first beam profiles (3).

11. A method of using the supporting frame (100) according to claim 10,
**characterized in that** the method comprises the steps:
- providing the supporting frame (100) with a fastening means (50, 51) arranged on a portion of the angle profile (20); and
- attaching an object which is to be carried by the supporting frame (100) to the fastening means (50, 51).

12. The method according to claim 11, wherein the attaching is carried out before the object is placed on a base.

13. The method according to claim 12, wherein the supporting frame (100) is fixed to the base by means of a fastening means (50) attached to the supporting frame (100).

14. The method according to claim 11, wherein the attachment is carried out after the supporting frame (100) has been fixed to a base by means of a fastening means (50) attached to the supporting frame (100).

## Patentansprüche

1. Vorrichtung (1) zur Verwendung bei der Befestigung eines Gegenstandes an einer Basis, wie beispielsweise einem Deck auf einem schwimmenden Schiff, wobei die Vorrichtung (1) aufweist:
- ein Balkenprofil (3) mit einem unteren Flansch (5), einem oberen Flansch (7) und einem Steg (9) zwischen dem oberen Flansch (7) und dem unteren Flansch (5), wobei der obere Flansch (7) eine Oberseite (11) in einer entgegengesetzten Richtung zu einer Stegfläche (13), zwei Randflächen (15, 15') und eine Vielzahl von Aussparungen (17) aufweist, welche sich entlang einer Längsrichtung von mindestens einem Abschnitt einer der Randflächen (15) erstrecken, **dadurch gekennzeichnet, dass** die Vorrichtung (1) ferner aufweist:
- ein Winkelprofil (20) mit einem ersten Bein (22) und mindestens einem zweiten Bein (24, 24'), wobei mindestens ein Teil des ersten Beins (22) derart angeordnet ist, dass es in der Anwendungsstellung gegen einen Teil der Oberseite (11) des oberen Flansches (7) anliegt, wobei das erste Bein (22) mindestens einen Stift (26) aufweist, welcher derart angeordnet ist, dass er mit einem Teil der besagten Vielzahl von Aussparungen (17) im Eingriff ist, wenn das erste Bein (22) gegen die Oberseite (11) anliegt; und
- ein Verschlussteil (30, 30'), welches in der Anwendungsstellung zwischen dem zweiten Bein (24, 24') und dem Steg (9) des Balkenprofils (3) an dem zweiten Bein (24, 24') befestigt ist, wobei ein Teil des Verschlussteils (30, 30') gegen einen Teil der Stegfläche (13) des oberen Flansches (7) anliegt.

2. Vorrichtung (1) gemäss Anspruch 1, wobei in der Anwendungsstellung der besagte Teil des Verschlussteils (30) sowohl gegen den besagten Teil der Stegfläche (13) als auch gegen die Randfläche (15) anliegt.

3. Vorrichtung (1) gemäss einem der Ansprüche 1 oder 2, wobei das Verschlussteil mittels mindestens zwei Schrauben (40), welche sich durch Löcher (25) im zweiten Bein (24, 24') hindurch erstrecken und in Gewindeverbindung mit den Löchern (32) am Verschlussteil (30) stehen, am zweiten Bein (24, 24') befestigt ist.

4. Vorrichtung (1) gemäss Anspruch 3, wobei in der Anwendungsstellung die Löcher (25) des zweiten Beines (24, 24') eine Ausdehnung in der Längsrichtung des Balkenprofils (3) aufweisen, welche grösser ist, als eine Ausdehnung in einer Richtung zwischen dem ersten Flansch (5) und dem zweiten Flansch (7), sodass beim Zusammenbau die Schrauben (40), und somit das Verschlussteil (30, 30') in Bezug auf das Winkelprofil (20) und das Balkenprofil (3) verschiebbar sind.

5. Vorrichtung (1) gemäss Anspruch 4, wobei die Ausdehnung der Löcher (25) in der Längsrichtung des Balkenprofils (3) grösser ist als der Abstand zwischen den Aussparungen (17).

6. Vorrichtung (1) gemäss einem der Ansprüche 3 bis 5, wobei die Vorrichtung (1) ferner ein Verbindungsmittel (50) mit Gewindelöchern (52) zur Positionierung auf dem zweiten Bein (24) des Winkelprofils (20) mittels der Schrauben (40) aufweist, wobei das Verbindungsmittel (50) derart angeordnet ist, dass es in der Anwendungsstellung auf der dem Verschlussteil (30) gegenüberliegenden Seite gegen das zweite Bein (24) anliegt, sodass das zweite Bein (24) zwischen dem Verbindungsmittel (50) und dem Verschlussteil (30) angeordnet ist.

7. Vorrichtung (1) gemäss Anspruch 6, wobei in der Anwendungsstellung die Gewindelöcher (52) in der Längsrichtung des Balkenprofils (3) eine Ausdehnung aufweisen, welche kleiner ist als eine Ausdehnung in einer Richtung zwischen dem ersten Flansch (5) und dem zweiten Flansch (7).

8. Vorrichtung (1) gemäss Anspruch 6, wobei in der Anwendungsstellung die Gewindelöcher (52) in der Längsrichtung des Balkenprofils (3) eine Ausdehnung aufweisen, welche grösser ist als eine Ausdehnung in einer Richtung zwischen dem ersten Flansch (5) und dem zweiten Flansch (7).

9. Vorrichtung (1) gemäss einem der vorhergehenden Ansprüche, wobei das erste Bein (22) des Winkelprofils (20) mindestens ein Loch (27) zur Aufnahme einer Befestigungsschraube aufweist.

10. Stützrahmen (100), hergestellt mittels einer Vorrichtung (1) gemäss einem der Ansprüche 1 bis 9, wobei der Stützrahmen (100) aus mindestens zwei ersten Balkenprofilen (3), welche parallel zueinander angeordnet sind und mittels mindestens zwei zweiten Balkenprofilen (3), welche ebenfalls parallel zueinander angeordnet sind, auseinander gehalten werden, wobei jeder der mindestens zwei zweiten Balkenprofilen (3) eine Endplatte (44) aufweist, welche fest an den Endbereichen der Balkenprofile (3) befestigt ist, wobei jede Endplatte (44) mit einem entsprechenden U-förmigen Winkelprofil (20), welches an den ersten Balkenprofilen (3) befestigt ist, verbunden ist.

11. Verfahren zur Verwendung des Stützrahmens (100) gemäss Anspruch 10, **dadurch gekennzeichnet, dass** das Verfahren die folgenden Schritte beinhaltet:
- Bereitstellen eines Stützrahmens (100) mit einem Befestigungsmittel (50, 51), welches an einem Bereich des Winkelprofils (20) angeordnet ist; und
- Befestigen eines Gegenstands, welcher durch den Stützrahmen (100) getragen werden soll, an dem Befestigungsmittel (50, 51).

12. Verfahren gemäss Anspruch 11, wobei das Befestigen ausgeführt wird, bevor der Gegenstand auf einer Basis platziert wird.

13. Verfahren gemäss Anspruch 12, wobei der Stützrahmen (100) mittels eines Befestigungsmittels (50), welches am Stützrahmen (100) befestigt ist, an der Basis befestigt ist.

14. Verfahren gemäss Anspruch 11, wobei das Befestigen ausgeführt wird, nachdem der Stützrahmen (100) mittels eines Befestigungsmittels (50), welches am Stützrahmen (100) befestigt ist, an einer Basis befestigt wurde.

## Revendications

1. Un appareil (1) destiné à être utilisé lors de la fixation d'un objet, tel qu'un pont sur un navire flottant, à une base, l'appareil (1) comprenant:
- un profil de poutre (3) muni d'une bride inférieure (5), une bride supérieure (7) et une bande (9) entre la bride supérieure (7) et la bride inférieure (5), la bride supérieure (7) comprenant une face supérieure (11) de sens opposé à une face de bande (13), deux faces de bord (15, 15'), et une pluralité de découpes (17) s'étendant le long d'une direction longitudinale d'au moins une partie d'une des faces de bord (15),
**caractérisé en ce que** l'appareil (1) comprend en outre :
- un profil d'angle (20) muni d'une première jambe (22) et d'au moins une seconde jambe (24, 24'), au moins une partie de la première jambe (22) étant agencée afin de reposer, dans la position d'application, contre une partie de la face supérieure (11) de la bride supérieure (7), la première jambe (22) étant dotée d'au moins une broche (26) agencée pour entrer en prise avec une partie de ladite pluralité de découpes (17) lorsque la première jambe (22) repose contre la face supérieure (11); et
- une pièce de verrouillage (30, 30') étant fixée, dans la position d'application, à la seconde jambe (24, 24') entre la seconde jambe (24, 24') et la bande (9) du profil de poutre (3), une partie de la pièce de verrouillage (30, 30') reposant contre une partie de la face de bande (13) de la bride supérieure (7).

2. L'appareil (1) selon la revendication 1, dans lequel, dans la position d'application, ladite partie de la pièce de verrouillage (30) repose à la fois contre ladite partie de la face de bande (13) et la face de bord (15).

3. L'appareil (1) selon la revendication 1 ou 2, dans lequel la partie de fixation est fixée à la seconde jambe (24, 24') au moyen d'au moins deux vis (40) traversant des trous (25) dans la deuxième jambe (24, 24') et étant reliées par filetage à des trous (32) dans la pièce de verrouillage (30).

4. L'appareil (1) selon la revendication 3, dans lequel, dans la position d'application, les trous (25) de la deuxième jambe (24, 24') ont une étendue dans la direction longitudinale du profil de poutre (3) qui est plus grande qu'une étendue dans une direction entre la première bride (5) et la deuxième bride (7), de sorte que, lors de l'assemblage, les vis (40) et ainsi la pièce de verrouillage (30, 30') sont déplaçables par rapport au profil d'angle (20) et le profil de poutre (3).

5. L'appareil (1) selon la revendication 4, dans lequel l'étendue des trous (25) dans la direction longitudinale du profil de poutre (3) est plus grande que la distance entre les découpes (17).

6. L'appareil (1) selon l'une quelconque des revendications 3 à 5, dans lequel l'appareil (1) comprend en outre un moyen de liaison (50) avec des trous de vis (52) pour le positionnement sur la deuxième branche (24) du profil d'angle (20) au moyen des vis (40), le moyen de liaison (50) étant agencé, afin de reposer, dans la position d'application, contre le deuxième pied (24) du côté opposé à celui de la pièce de verrouillage (30), de sorte que la deuxième jambe (24) se trouve entre le moyen de liaison (50) et la pièce de verrouillage (30).

7. L'appareil (1) selon la revendication 6, dans lequel, dans la position d'application, les trous de vis (52) ont une étendue dans la direction longitudinale du profil de poutre (3) qui est inférieure à une étendue dans une direction entre la première bride (5) et la deuxième bride (7).

8. L'appareil (1) selon la revendication 6, dans lequel, dans la position d'application, les trous de vis (52) ont une étendue dans la direction longitudinale du profil de poutre (3) qui est plus grande qu'une étendue dans une direction entre la première bride (5) et la deuxième bride (7).

9. L'appareil (1) selon l'une quelconque des revendications précédentes, dans lequel le premier pied (22) du profil d'angle (20) est pourvu d'au moins un trou (27) pour recevoir une vis de fixation.

10. Un cadre de support (100) réalisé au moyen de l'appareil (1) selon l'une quelconque des revendications 1 à 9, dans lequel le cadre de support (100) est assemblé à partir d'au moins deux premiers profils de poutre (3) qui sont disposés parallèlement l'un à l'autre et maintenus espacés au moyen d'au moins deux seconds profils de poutre (3) qui sont également disposés parallèlement l'un à l'autre, chacun des au moins deux seconds profils de poutre (3) étant pourvu d'une plaque d'extrémité (44) fixée de manière fixe aux parties d'extrémité des profils de poutre (3), chaque plaque d'extrémité (44) étant reliée à un profil d'angle en forme de U respectif (20) qui est fixé aux premiers profils de poutre (3).

11. Un procédé d'utilisation du cadre de support (100) selon la revendication 10, **caractérisé en ce que** le procédé comprend les étapes:
- doter le cadre de support (100) d'un moyen de fixation (50, 51) agencé sur une partie du profil d'angle (20); et
- fixer un objet destiné à être porté par le cadre de support (100) au moyen de fixation (50, 51).

12. Le procédé selon la revendication 11, dans lequel la fixation est effectuée avant que l'objet ne soit posé sur une base.

13. Le procédé selon la revendication 12, dans lequel le cadre de support (100) est fixé à la base au moyen d'un moyen de fixation (50) fixé au cadre de support (100).

14. Le procédé selon la revendication 11, dans lequel la fixation est réalisée après que le cadre de support (100) a été fixé à une base au moyen d'un moyen de fixation (50) fixé au cadre de support (100).
